# EUROPÄISCHE PATENTANMELDUNG

(11) **EP 1 500 464 A2**
(43) Veröffentlichungstag der Anmeldung: **26.01.2005**
(21) Anmeldenummer: 04016702.5
(22) Anmeldetag: 15.07.2004
(51) Int. Cl.: B23Q 39/02, B23Q 39/04, B23Q 5/32

(54) **Bearbeitungszentrum mit einer gegenüber einer ersten Spindel axial bewegbaren zweiten Spindel**

(30) Priorität: 18.07.2003 DE 10333051
(71) Anmelder: Grob-Werke Burkhart Grob e.K., 87719 Mindelheim (DE)
(72) Erfinder: Lutz, Heinrich, 87742 Dirlewang (DE)
(74) Vertreter: Pfister, Stefan, Dipl.-Phys.

(57) **Zusammenfassung**

Die Erfindung betrifft ein Bearbeitungszentrum für die insbesondere spanabhebende Bearbeitung von Werkstücken. Das Bearbeitungszentrum trägt mindestens zwei Motorspindeln. Zumindest eine Spindel ist gegenüber der anderen Spindel axial zur Spindelachse bewegbar, insbesondere zurückbewegbar.

## Beschreibung

Die Erfindung betrifft ein Bearbeitungszentrum für die insbesondere spanabhebende Bearbeitung von Werkstücken, wobei das Bearbeitungszentrum eine Bearbeitungseinheit aufweist, welche mindestens zwei Spindeln trägt.

Vorgenanntes Bearbeitungszentrum ist als Bearbeitungsstation in Transferstraßen mit normal angetriebenen Spindeln über Zahnriemen oder Getriebe hinlänglich bekannt. Der Vorteil von Bearbeitungszentren mit mehreren Spindeln liegt darin, daß während das Werkstück in dem Bearbeitungszentrum positioniert und gespannt ist, durch den gleichzeitigen Eingriff mehrerer durch die Spindeln angetriebener Werkzeuge eine höhere Zerspanleistung möglich ist. Die Effizienz beziehungsweise Leistung solcher Bearbeitungszentren ist entsprechend höher.

Nun ergibt es sich aber, daß die in der Regel benachbart zueinander angeordneten Spindeln nicht beliebig eng nebeneinander angeordnet werden können. Der Mindestabstand der beiden Spindeln nebeneinander ist durch die Breite der Spindeln bestimmt. Diese Vorgabe muß bei der Bearbeitung der Werkstücke natürlich entsprechend berücksichtigt werden. Sind zum Beispiel bei einem Werkstück wie zum Beispiel einem Zylinderkopf eng nebeneinander liegendende Bohrungen auszuführen, so bearbeitet die zweite Spindel nicht das nächstbenachbarte Bohrloch, sondern zum Beispiel erst das nächste oder übernächste.

Nach dem Abschluß einer ersten Bearbeitung durch die beiden Spindeln wird das Werkstück relativ zur Bearbeitungseinheit seitlich für die nächsten Bearbeitungen durch die gleichen Spindeln versetzt.

In diesem Fall kann es sich dann ergeben, daß im Randbereich die zweite Spindel nicht mehr auf das Werkstück einwirkt und vielleicht mit der Werkstückhalterung oder sonstigen Maschinenteilen kollidiert, oder mit dem Randbereich des Werkstückes, da dieser breiter sein kann als der Abstand der Bohrungen.

Des weiteren ist es bekannt, gattungsgemäße Bearbeitungszentren so auszubilden, daß das Zentrum mit seinen mehreren Spindeln gleichzeitig mehrere Werkstücke bearbeitet und so eine entsprechend höhere Zerspanleistung erreicht wird, wobei diese aber dann notwendigerweise immer nur im Mittel für mehrere Werkstücke besteht. Mit den bekannten Bearbeitungszentren ist aber eine effektive, mit hoher Zerspanleistung durchgeführte Bearbeitung bei kleinen Werkstücken nicht möglich.

Es ist Aufgabe der Erfindung, eine Kollision zumindest einer Spindel bei mit mehreren Spindeln ausgestatteten Bearbeitungszentren mit übrigen Maschinenteilen zu vermeiden, wenn die Spindel nicht mehr für eine Bearbeitung am Werkstück positionierbar ist.

Zur Lösung dieser Aufgabe geht die Erfindung aus von einem Bearbeitungszentrum, wie eingangs beschrieben, und schlägt vor, daß zumindest eine Spindel gegenüber einer anderen Spindel axial zur Spindelachse bewegbar, insbesondere zurückbewegbar ist.

Durch die Erfindung wird erreicht, daß die Spindel, die nicht mehr mit dem Werkstück zusammenwirken kann, weil sie zum Beispiel seitlich so weit zur Seite versetzt ist, daß sie nicht mehr auf das Werkstück einwirken kann, sondern mit dem Werkstückträger zu kollidieren droht, einfach zurückgezogen wird, und so in jedem Fall außer Eingriff auch mit den Maschinenteilen ist. Durch den erfindungsgemäßen Vorschlag ist es möglich, eine hohe Zerspanleistung zu erreichen, da gleichzeitig mehrere Spindeln mit dem Werkstück in Eingriff zu bringen sind, wobei durch die Erfindung sicher vermieden wird, daß nicht mehr benötigte Spindeln nicht mit Maschinenteilen oder dem Werkstückrand kollidieren.

Der erfindungsgemäße Vorschlag eröffnet aber auch überraschende zusätzliche Möglichkeiten. Die mehrspindelige Anordnung in den erfindungsgemäßen Bearbeitungszentren wird bevorzugt ausgenutzt, um zum Beispiel eine Mehrzahl von Bohrungen im gleichen Rasterabstand an einem Werkstück auszuführen. Der erfindungsgemäße Vorschlag kann aber nicht nur dafür eingesetzt werden, daß die an der Seite befindliche Spindel zur Vermeidung von Kollisionen zurückgezogen wird, sondern er kann auch dazu eingesetzt werden, eine Spindel während der Bearbeitung einfach auszuschalten, zum Beispiel weil gerade keine weitere Bohrung in dem gewünschten Rastermaß anzubringen ist.

Auch wenn oftmals in diesem Zusammenhang als von einer Bohrung als Beispiel der Bearbeitung gesprochen wird, so ist die Erfindung in keinster Weise auf eine Bohrung beschränkt. Die Erfindung kann mit jeglicher spanabhebender Bearbeitung oder mit anderen Bearbeitungsanwendungen eingesetzt werden.

Diese zusätzliche Möglichkeit erlaubt es, bei dem erfindungsgemäßen Bearbeitungszentrum nicht nur eine Bearbeitung in einem gewünschten Rastermaß auszuführen, es können auch Bearbeitungen mit einer Spindel in beliebiger Weise durchgeführt werden, wobei dann zum Beispiel die andere Spindel zurückgesetzt ist und sicher nicht auf das Werkstück einwirkt.

In einer bevorzugten Variante der Erfindung ist vorgesehen, daß die Spindeln in einer gemeinsamen Pinole angeordnet sind und die Pinole gegen das Werkstück anstellbar ist. Die Pinole bewirkt eine Bewegung der Spindel entlang der Spindelachse, üblicherweise als Z-Achse bezeichnet. Die Bewegung der Spindel in der Pinole muß dabei höchstgenau ausgeführt werden, da diese Bewegung unmittelbar zu dem Bearbeitungsergebnis im Werkstück führt. Dabei ist es günstig, da mit den erfindungsgemäßen Bearbeitungszentren ja bevorzugt in Rastermaßen Bearbeitungen ausgeführt werden, die Spindeln in einer gemeinsamen Pinole anzuordnen und so gemeinsam gegen das Werkstück anzustellen.

In einer weiteren Variante der Erfindung ist vorgesehen, daß auf der Bearbeitungseinheit mindestens zwei, bevorzugt parallel orientierte Pinolen mit je zwei eigenen Spindeln angeordnet sind. Auch diese Anordnung führt zu einer hohen Flexibilität, da die Spindeln auf der Bearbeitungseinheit unabhängig voneinander bewegt werden können. Allerdings ist dies mit erhöhtem Aufwand verbunden, da ein eigener Antrieb pro Pinole vorgesehen werden muß.

Des weiteren ist es von Vorteil, daß der Abstand der Spindeln variierbar ist. Üblicherweise werden Bearbeitungen mit einem festen Rastermaß ausgeführt. Um aber das Umrüsten, zum Beispiel bei dem Bearbeiten mit einem anderen Rastermaß, zu erleichtern, ist in einer erfindungsgemäßen Variante vorgesehen, auch den Abstand der Spindel zu variieren, wodurch das erfindungsgemäße Bearbeitungszentrum auch bei Werkstücken mit geänderten Rastermaßen einsetzbar ist. Günstigerweise wird dabei zumindest eine Spindel auf einer beweglichen, bevorzugt zur Spindelachse rechtwinkligen Führung aufgesetzt und so der Abstand der Spindel variiert.

Des weiteren sieht die Erfindung vor, daß die Spindeln auf einem gemeinsamen Spindelschlitten der Bearbeitungseinheit angeordnet sind und der Spindelschlitten gegen das Werkstück anstellbar ist. Alternativ zu der Anordnung der Spindeln in einer gemeinsamen Pinole ist es möglich, einen gemeinsamen Spindelschlitten für die Bewegung der Spindeln vorzusehen. Sowohl bei der Lösung mit einer gemeinsamen Pinole wie auch bei der Lösung mit dem Spindelschlitten ist erfindungsgemäß vorgesehen, daß zumindest eine Spindel bezüglich der anderen Spindel (beide Spindeln befinden sich aber auf der Pinole beziehungsweise dem Spindelschlitten und werden gemeinsam gegen das Werkstück angestellt) zurückziehbar beziehungsweise bewegbar ist.

Hieraus resultiert, daß zumindest eine erste Spindel in der Pinole oder auf dem Spindelschlitten fest angeordnet ist, zumindest eine zweite Spindel in der Pinole oder auf dem Spindelschlitten axial zur Spindelachse bewegbar, insbesondere zurückbewegbar ist. Diese erfindungsgemäße Variante löst mit verhältnismäßig geringem Aufwand die eingangs gestellte Aufgabe.

In einer bevorzugten Variante der Erfindung ist vorgesehen, daß das Verhältnis zwischen dem Abstand der Spindelachsen und dem Spindeldurchmesser kleiner 2 und größer 1, bevorzugt kleiner 1,5 und größer 1,01 ist.

Der erfindungsgemäße Aufbau erlaubt eine sehr enge Anordnung der beiden Spindeln, die bevorzugt gleichartig ausgebildet sind, also einen gleichen Spindeldurchmesser besitzen. Gelingt es, wie in dieser erfindungsgemäßen Variante vorgesehen, den Spindelabstand entsprechend gering zu wählen, so wird erreicht, daß auch bei verhältnismäßig kleinen Werkstücken mehrere Spindeln gleichzeitig in Einsatz zu bringen sind, wodurch sich die Effizienz bei der Bearbeitung auch nur eines Werkstückes entsprechend erhöht. Im Stand der Technik war zwar auch eine verhältnismäßig hohe Effizienz erreichbar, jedoch waren hierzu verhältnismäßig große Bearbeitungszentren notwendig, da es nicht möglich war, daß die verschiedenen Spindeln gleichzeitig auf das gleiche Werkstück einzuwirken vermögen. Die Erfindung erreicht damit eine sehr effektive Platzausnutzung, da auf engem Raum eine große Spindeldichte anbietbar ist, die zu einer hohen Zerspanleistung führt und gleichzeitig auch zum Beispiel für die Bearbeitung von Zylinderköpfen oder Zylinderblöcken für Automotoren verwendbar ist.

Dabei geligt es der Erfindung, verhältnismäßig schmalbauende Spindeldurchmesser, zum Beispiel mit einem Durchmesser bis 200 mm oder bevorzugt mit ca. 150 mm einzusetzen, die eine effiziente Bearbeitung, wie beschrieben, erlauben. Im Ergebnis wird dadurch erreicht, daß die erste und die zweite Spindel das gleiche Werkstück zu bearbeiten vermögen.

In einer bevorzugten Ausgestaltung der Erfindung ist vorgesehen, daß an der zweiten, bewegbaren Spindel, auf der dem Werkzeug abgewandten Seite eine Zugstange angreift. Diese erfindungsgemäße Weiterentwicklung ist günstig im Hinblick auf einen möglichst geringen Achsabstand der Spindeln. Der Antrieb für das Zurückbewegen der Spindel greift an der Spindel hinten, auf der dem Werkzeug abgewandten Seite an. Der für die Bewegung der Zugstange vorgesehende Axialantrieb, zum Beispiel ein Kugelrollspindelantrieb, ein Elektromotor oder ein hydraulisch oder pneumatisch wirkender Arbeitszylinder oder ein sonstiger Axialantrieb befinden sich dabei ebenfalls im hinteren Bereich und verbreitert nicht die Gesamtbauform. Dadurch ist es möglich, nach wie vor einen verhältnismäßig engen Abstand der Spindel zu erreichen, der im wesentlichen nur durch die Breite der Spindeln, und deren Lagerung auf dem Spindelschlitten beziehungsweise in der Pinole bestimmt ist.

Alternativ ist es natürlich möglich, den Axialantrieb an der Spindel selber anzuordnen, zu Lasten eines geringen Abstandes zwischen den beiden Spindeln. Dies verringert die Gesamtlänge der Anordnung.

Für ein möglichst exaktes Positionieren der zweiten, bewegbaren Spindel weist die Bearbeitungseinheit eine Führung auf. Die Führung muß insbesondere dann sehr exakt sein, wenn die zweite bewegbare Spindel in der vorderen Position ist, also in der Position, in welcher die Spindel auf das Werkstück einzuwirken vermag. Für einen möglichst störungsfreien Betrieb ist natürlich eine möglichst exakte Führung ebenfalls von Vorteil.

Bevorzugterweise besitzt die Bearbeitungseinheit einen Zentrierflansch, der mit dem Spindelkopf der zweiten Spindel zur Festlegung der zweiten Spindel zusammenwirkt. Der Zentrierflansch ist letztendlich für eine hochgenaue Positionierung und auch Ausrichtung der Spindelachse der zweiten Spindel verantwortlich. Es muß hierbei zum einen die Ausrichtung der Achse wie auch die axiale Lage exakt definiert werden. Günstigerweise sind an den Bearbeitungszentren in diesem Bereich entsprechende Einstellmöglichkeiten geschaffen, um eine hochgenaue Abstimmung zu erreichen.

In einer weiteren, erfindungsgemäßen Verbesserung ist vorgesehen, daß der Zentrierflansch als Kegelsitz ausgebildet ist. Der Kegelsitz bietet dabei zwei Vorteile. Zum einen wird die axiale Lage der Spindel exakt festgelegt und ein für die Bewegung der Spindel notwendiges Spiel sicher eliminiert.

Es ist zu beachten, daß die Spindel mit hoher Drehzahl rotiert. Die festgelegte erste Spindel findet ihr Widerlager für die Rotationsbewegung in der Festlegung der Spindel an der Bearbeitungseinheit. Hierfür muß bei der zweiten bewegbaren Spindel noch gesorgt werden. Günstigerweise ist hierzu eine Verdrehsicherung vorgesehen, die zum Beispiel durch das Eingreifen einer Leiste oder Feder in eine Nut in einfacher Weise realisiert wird. Dabei ist die Leiste in der Nut längsbewegbar, um die axiale Bewegung der zweiten Spindel zu erlauben. Es reicht dabei aus, daß die Verdrehsicherung dann exakt wirkt, wenn sich die zweite Spindel in der vorderen Position befindet, also für Bearbeitungszwecke eingesetzt wird.

In einer Variante gemäß der Erfindung ist auch vorgesehen, daß die Verdrehsicherung entlang der Bewegung der zweiten Spindel in Spindelrichtung wirkt. Somit besteht auch eine Verdrehsicherung während der Zeit, in welcher die Spindel nicht für Bearbeitungszwecke unmittelbar einzusetzen ist. Dadurch ist sichergestellt, daß auch die anlaufende oder abbremsende Spindel sicher bewegt werden kann und die Spindel auch in dieser Zeit verdrehgesichert ist. Da dann die Bewegungen parallel, gleichzeitig erfolgen können, das heißt, die Rückzugsbewegung erfolgt parallel mit dem Abbremsen der Spindel, wird bei den Bearbeitungszyklen entsprechend Zeit eingespart, was letztendlich die Effizienz des erfindungsgemäßen Bearbeitungszentrums steigert.

Natürlich sieht die Erfindung auch eine Variante vor, bei welcher sowohl eine Verdrehsicherung während der Bewegung der Spindel in Spindelrichtung vorhanden ist, wie auch eine Verdrehsicherung dann wirksam ist, wenn die Spindel in der vorderen Position ist. Eine solche Anordnung stellt zu jedem Einsatzzeitpunkt eine Verdrehsicherung zur Verfügung.

In einer bevorzugten Variante der Erfindung ist vorgesehen, daß die Verdrehsicherung durch einen in einer Nut geführten Nutenstein gebildet ist. Die Nut ist dabei parallel zur Spindelachse ausgeführt und bildet eine Verdrehsicherung, insbesondere während der Bewegung der zweiten Spindel in Spindelrichtung. Dabei ist es möglich, entweder die Nut oder den Nutenstein an der Spindel beweglich anzuordnen, und das andere, damit korrespondierende Element feststehend auszubilden. Beide Varianten sind gemäß der Erfindung möglich. Günstigerweise wird in den Nutenstein auch eine Verdrehsicherung integriert, die dann wirksam wird, wenn die zweite Spindel in ihrer vorderen Position ist. Dies wird zum Beispiel durch das Eintauchen des vorderen Teils des Nutensteins in eine entsprechende Verdrehbohrung erreicht. Auf diese Art und Weise wird eine einfache, hocheffiziente Verdrehsicherung sowohl für das Festlegen der Spindel in ihrer vorderen Bearbeitungsposition, wie auch währen der Bewegung der Spindel zur Verfügung gestellt.

Günstigerweise ist vorgesehen, daß für die zweite Spindel auf der Bearbeitungseinheit ein Gehäuse vorgesehen ist und auf dessen Mantelinnenfläche Führungen für die bewegte zweite Spindel angeordnet sind. Des weiteren ist es von Vorteil, daß an dem Gehäuse ein Widerlager für den Axialantrieb angeordnet ist. Das Gehäuse ist dabei ausreichend stabil gebildet, um das Widerlager zu bilden und gleichzeitig die Führungen auszubilden. Günstigerweise ist das Gehäuse dabei zylinderartig ausgebildet, wobei der Boden, entsprechend stabil ausgebildet, das Widerlager für den Axialantrieb bildet. Dabei ist zu beachten, daß der Axialantrieb eine ausreichende Kraft entwickelt, da der Vorschub der Pinole beziehungsweise des Spindelschlittens, welcher die beiden Spindeln trägt, die beweglich gelagerte zweite Spindel zurückzudrücken versucht.

Gegebenenfalls kann bei dem Axialantrieb dabei deswegen zum Beispiel ein Verschluß, eine Arretierung oder eine Einrastung vorgesehen sein, um die zweite bewegbare Spindel sicher in der vorderen Position zu halten. Diese Arretierung kann aber auch an einer anderen geeigneten Stelle angeordnet sein, zum Beispiel im Flanschbereich. Alternativ ist es möglich, daß zum Beispiel der Axialantrieb ausreichend stark dimensioniert ist, um die Arretierung zu bewirken.

Bevorzugterweise ist eine hydraulische oder mechanische Arretierung der zweiten Spindel in der vorderen Position vorgesehen. Eine hydraulische Arretierung wird zum Beispiel dann eingesetzt, wenn die Bewegung der Spindel sowieso durch einen hydraulisch wirksamen Arbeitszylinder erfolgt. Der Arbeitszylinder ist dann günstigerweise doppelwirkend ausgebildet und die Vorschubbewegung des Arbeitszylinders wird mit Druck beaufschlagt, wodurch die Spindel gegen den Zentrierflansch fährt und so arretiert ist. Es ist aber auch möglich, eine entsprechende mechanische Arretierung vorzusehen. Hierzu sind zum Beispiel entsprechende Kraftverstärker wie Kniehebelanordnungen oder dergleichen einsetzbar die wirksam werden, wenn die zweite Spindel in der vorderen Position ist. Die Arretierung ist dabei so auszugestalten, daß sie in jedem Fall eine Maßgenauigkeit garantiert, auch wenn die Bearbeitungskräfte auf die Spindel wirken und diese zurückzudrücken versuchen.

Es ist günstig, wenn zumindest Teile des Gehäuses, zumindest Teile der die Spindel aufnehmenden Pinole oder die Spindeln tragende Spindelschlitten sind. Eine solche Anordnung spart Gewicht, da den jeweiligen Teilen eine doppelte Funktion zugeordnet wird.

Des weiteren sieht die Erfindung vor, daß die Bearbeitungseinheit mindestens zwei Gruppen mit mindestens einer oder mehreren Spindeln aufweist und zumindest Spindeln einer Gruppe gegenüber Spindeln der anderen Gruppe axial bewegbar, insbesondere zurückbewegbar sind. Die Erfindung beschränkt sich dabei nicht nur auf das Bewegen, insbesondere Zurückbewegen einer Spindel gegenüber einer anderen Spindel, sondern kann in gleicher Weise erfindungsgemäß auch bei einer Gruppe von Spindeln eingesetzt werden. Günstigerweise werden dabei diese Spindeln einer Gruppe gemeinsam bewegt.

Es ist von Vorteil, daß die zweite zurückbewegbare Spindel um ein größeres Maß zurückziehbar ist wie die Bohrtiefe im Werkstück oder der Vorschubweg der Pinole beziehungsweise des Spindelschlittens während der Bearbeitung. Hierdurch wird sichergestellt, daß die zweite Spindel, wenn diese nicht benötigt wird, also zurückgesetzt ist, sicher außer Eingriff - auch während der Bearbeitung - ist.

In einer bevorzugten Variante der Erfindung ist vorgesehen, daß die Spindel einen Direktantrieb aufweist. Mit anderen Worten gesprochen ist vorgesehen, daß die Spindel als Motorspindel ausgebildet ist. Diese sehr platzsparende Anordnung erlaubt die Spindel mit hoher Geschwindigkeit anzutreiben, wobei im Gegensatz zu den bekannten Riemenantrieben oder Getriebeantrieben ein solcher Direktantrieb nicht zu unerwünschten Erschütterungen des Werkzeuges führt, die unter Umständen zu Maßungenauigkeiten bei der Bearbeitung führen können. Gleichzeitig wird dadurch eine platzsparende Anordnung erreicht, was insbesondere bei der Bearbeitung von kleineren Werkstücken mit hoher Effizienz günstig ist.

Für einen sicheren Betrieb des erfindungsgemäßen Bearbeitungszentrums ist vorgesehen, daß das Bearbeitungszentrum eine mit der Pinole beziehungsweise dem Spindelschlitten mitfahrende, an der Rückseite der Spindel angeordnete Kabelwanne aufweist. In der Kabelwanne sind sämtliche Medienleitungen, die für den Betrieb der Spindel notwendig sind, insbesondere Elektroanschlüsse, Kühlflüssigkeitanschlüsse, Druckluftanschlüsse und so weiter derart eingelegt und geführt, daß es auch bei einer Bewegung der Pinole beziehungsweise des Spindelschlittens nicht zu unerwünschten Störungen durch zum Beispiel festliegende Leitungen und so weiter kommt.

Da die zweite Spindel bezüglich der Pinole beziehungsweise des Spindelschlittens beweglich ausgebildet ist ist es günstig, an der zweiten Spindelrückseite eine mit dieser mitfahrenden Kabelführung vorzusehen, die letztendlich das Gleiche analog leistet wie die Kabelwanne für die Gesamtpinole beziehungsweise den Spindelschlitten. In diesem Zusammenhang ist es dann von Vorteil, eine Führung der Kabelführung in der Kabelwanne vorzusehen, um die Kabelführung sicher und zuverlässig abzustützen und zu führen.

In der Zeichnung ist die Erfindung schematisch dargestellt. Es zeigen:
- Fig. 1, 6: je eine Draufsicht auf die Spindeln des erfindungsgemäßen Bearbeitungszentrums,
- Fig. 2, 5: je eine Ansicht eines weiteren Details der Erfindung,
- Fig. 3:: eine Rückansicht der Spindeln des erfindungsgemäßen Bearbeitungszentrums,
- Fig. 4:: eine Draufsicht auf den vorderen Teil des erfindungsgemäßen Bearbeitungszentrums.

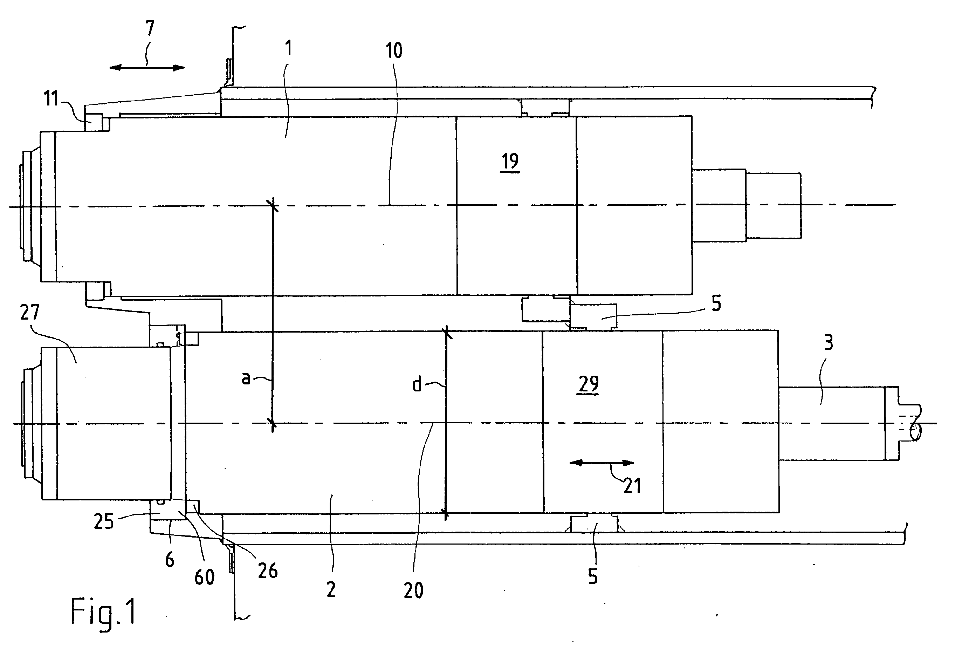

In Fig. 1 ist die Erfindung gezeigt. Das erfindungsgemäße Bearbeitungszentrum ist hier nur in einem Detailausschnitt gezeigt, was aber für die Darstellung der Erfindung völlig ausreichend ist. Das Bearbeitungszentrum besitzt mehrere Spindeln 1, 2. Diese sind bevorzugt zum Beispiel in einer gemeinsamen Pinole oder auf einem gemeinsamen Spindelschlitten angeordnet. Die gemeinsame Bewegung der Spindeln 1, 2 ist durch den Doppelpfeil 7 angeordnet. Diese Bewegung wird von der Pinole oder dem Spindelschlitten ermöglicht.

Die in Fig. 1 oben gezeigte erste Spindel 1 ist fest in der Pinole oder auf dem Spindelschlitten angeordnet. Die Spindelachse der ersten Spindel 1 ist mit 10 gekennzeichnet. Für eine exakte Ausrichtung der Spindelachse 10 dient ein Zentrierflansch 11, der mit der Spindel im vorderen Bereich fest verschraubt ist.

Die untere zweite Spindel 2 ist in Richtung der Spindelachse 20 bewegbar. Dies ist durch den Doppelpfeil 21 angedeutet. Erreicht wird diese Bewegung durch die am hinteren Ende der Spindel 2 angreifenden Zugstange 3. Für eine möglichst axiale Bewegung der Spindel 2 sind Führungen 5 und 25 vorgesehen. Diese Führungen 5 und 25 sind auf der inneren Seite des Gehäuses 23 angeordnet.

Die Spindel 2 ist in der hier dargestellten Stellung in der vorderen Position also arbeitsbereit. In der zurückgezogenen Position ist der Spindelkopf 27 soweit zurückbewegt, daß ein auf dem Spindelkopf 27 montiertes, hier aber nicht gezeigtes Werkzeug, nicht wieder mit dem Werkstück in Eingriff gerät oder sonst mit sonstigen Maschinenteilen oder Werkstückträgern usw. zu kollidieren droht.

Um die bewegbare zweite Spindel 2 in der vorgeschobenen Position sicher und zuverlässig axial auszurichten, weist die Spindel 2 an ihrem Spindelkopf 27 einen anderen Aufbau auf, wie die andere fest montierte Spindel 1. An dem Spindelkopf 27 ist ein Konus vorgesehen. Dieser Konus wirkt zusammen mit dem Zentrierflansch 25, der Teil der Pinole oder des Spindelschlittens ist. Der Konus erreicht eine sichere, parallele Ausrichtung sowie auch eine axiale Positionierung der zweiten Spindel 2. Um die Lage exakt festzulegen, sind Abstimmscheiben 26 vorgesehen. Diese werden eingesetzt, bis der Konus spielfrei ist. Günstigerweise ist auch an der Abstimmscheibe 26 eine Verdrehsicherung vorgesehen, die dem von der Werkzeugspindel erzeugten Drehmoment zu widerstehen hat.

Auch in dem Zentrierflansch 25 ist eine Verdrehsicherung 6, 60 vorgesehen, diese kann zum Beispiel durch eine entsprechend vorgesehene Nut ausgebildet sein, in die eine Nase, Leiste oder Feder eingreift, um eine drehfeste Anordnung der axial bewegbaren Spindel 2 zu erreichen.

In dem hier gezeigten Ausführungsbeispiel ist mit a der Abstand der beiden Spindelachsen 10, 20 gekennzeichnet. Die Spindelachsen 10, 20 sind parallel orientiert. Das Verhältnis zwischen dem Abstand a der Spindelachsen 10, 20 und dem Spindeldurchmesser d ist nach der Erfindung kleiner 2, aber größer 1, bevorzugt kleiner 1,5 und größer 1,01. In dem hier gezeigten Ausführungsbeispiel beträgt das Verhältnis ungefähr 1,2. Es sind aber auch Bauformen bekannt, bei welchen der Abstand a 156 mm beträgt und der Durchmesser der eingesetzten Spindel 150 mm. Das Verhältnis beträgt in einem solchen Fall dann 1,04!

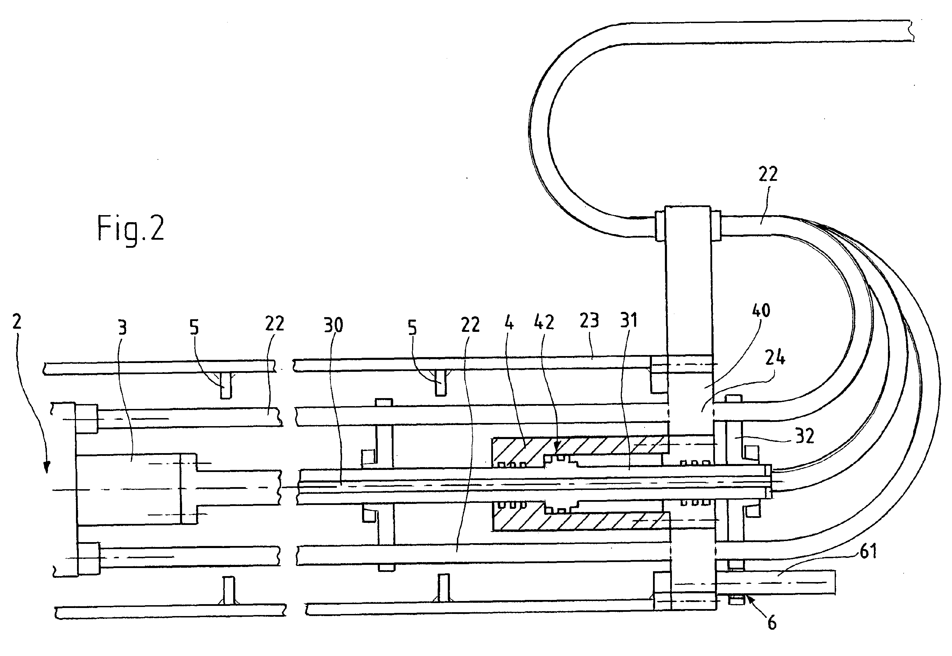

Für die Bewegung der zweiten Spindel 2 ist eine Zugstange 3 vorgesehen, auf die ein Axialantrieb 4 wirkt. Dies ist zum Beispiel in Fig. 2 gezeigt. Rückseitig an den Spindeln 1, 2 schließen diverse Leitungen 22 an. Diese können zum einen Kühlflüssigkeit, wie auch Schmierflüssigkeiten, zum Beispiel wie für das Kühlen und Schmieren des Werkzeuges, heranführen. Die Kühlung dient zur Abfuhr der Wärme in der Spindel. Es sind auch elektrische Leitungen, zum Beispiel für den Spindelantrieb oder Steuerleitungen, vorgesehen.

Fig. 2 zeigt ausschnittsweise nur die Verhältnisse im hinteren Bereich der zweiten Spindel. Zur Übersichtlichkeit ist der hintere Bereich der ersten Spindel 1 nicht gezeigt. Auf die Zugstange 3 wirkt, wie angedeutet, der Axialantrieb 4. In dem hier ausgeführten Beispiel ist der Axialantrieb 4 als hydraulischer Arbeitszylinder 42 ausgebildet. Die Zugstange 3 bildet in dem Arbeitszylinder 42 die Kolbenstange 31. Auf der Kolbenstange 31 sitzt der Kolben, der von der Hydraulikflüssigkeit beaufschlagt wird und sich daher bewegt. Es ist klar, daß der Arbeitszylinder genau positioniert ist, um eine möglichst genaue Bewegung der zweiten Spindel 2 zu erreichen. Günstigerweise ist die Zugstange mehrfach gelagert. Es ist von Vorteil, daß ein Gehäuse 23 vorgesehen ist, welches die Spindel 2 zylinderartig umgibt. Auf der Mantelinnenfläche dieses Gehäuses 23 sind Führungen 5 und 25 für die Spindel 2 vorgesehen. Gleichzeitig sind die Führungen so ausgebildet, daß sie eine Aussteifung des Gehäuses 23 erreichen. Gegebenenfalls dient die Führung 5 auch als Montageführung.

Günstigerweise wird eine Bohrung 30 in der Kolbenstange 31 vorgesehen. Durch diese Bohrung wird ebenfalls Kühlflüssigkeit in die Spindel 2 zugeleitet.

Das Gehäuse 23, welches gegebenenfalls Teil der Pinole der beiden Spindeln 1, 2 ist, besitzt einen Gehäuseboden 24. Dieser Gehäuseboden 24 dient gleichzeitig auch als Widerlager 40 für den Axialantrieb 4. Die Kolbenstange 31 ist durch den Gehäuseboden 24 herausgeführt und trägt auf der Außenseite einen Querträger 32. Der Querträger 32 besitzt wiederum eine gegebenenfalls ungenau wirkende Verdrehsicherung, die aber während der gesamten Hub- beziehungsweise Rückzugbewegung der zweiten Spindel 2 aktiv ist. Diese Verdrehsicherung 61 ist dem unteren Bereich angeordnet. Des weiteren dient der Querträger 32 zur Fixierung der Schläuche und Kabel 22.

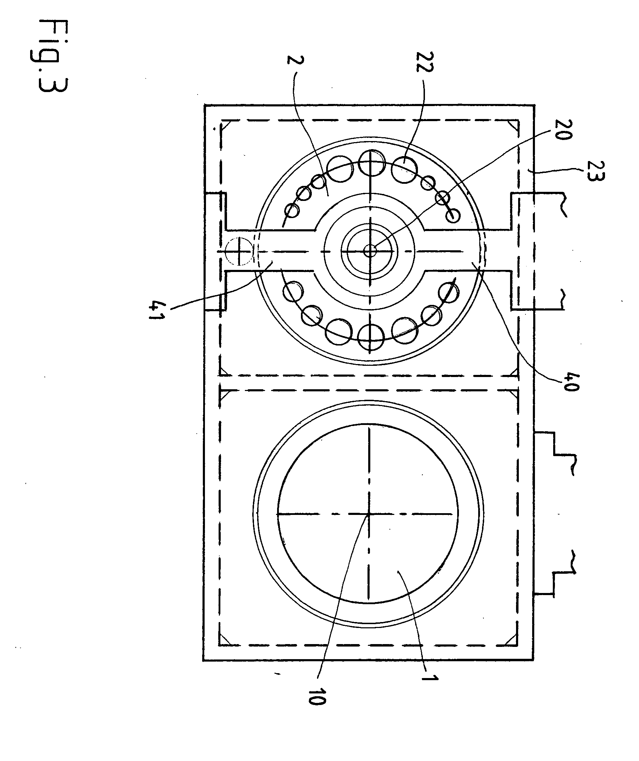

Des weiteren ist in Fig. 3 noch eine Ansicht von hinten gezeigt. Das Gehäuse 23 ist im wesentlichen quadratisch oder rechteckig ausgebildet. Es nimmt die beiden Spindeln 1, 2 auf. Der Axialantrieb 4, hier als hydraulisch wirkender Zylinder, ist durch die Befestigung 41 mit dem Gehäuse 23 verbunden. In diesem Ausführungsbeispiel ist die Befestigung 41 auch gleichzeitig das Widerlager 40. Es können aber auch zwei getrennte Elemente vorgesehen sein.

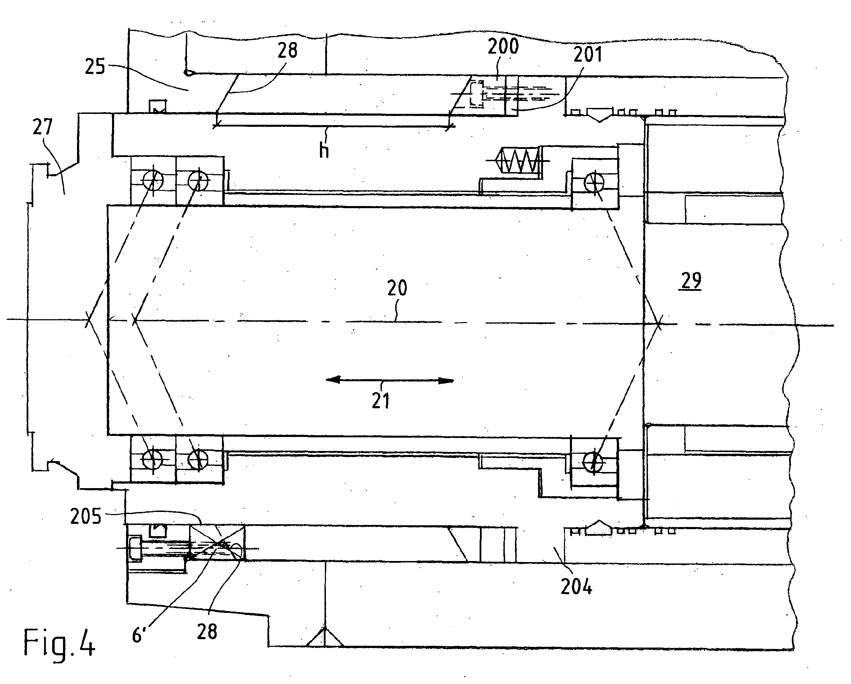

In Fig. 4 ist der vordere Teil der Spindel einer weiteren erfindungsgemäßen Ausgestaltung des Bearbeitungszentrums gezeigt. Der Zentrierflansch 25 ist in dem hier gezeigten Ausführungsbeispiel als Kegelsitz 28 ausgebildet. Die Spindel 2 ist entlang des Hubes h in Richtung der Spindelachse 20 bewegbar. An der Spindel ist ein Anlaufring 200 vorgesehen. Zur exakten Einstellung der Lage sitzt zwischen dem Anlaufring 200 und dem Absatz 204 eine Abstimmscheibe 201. Im Bereich des Spindelkopfes 27 ist eine Führung 205 vorgesehen. Alle Führungen in diesem Bereich sind mit einem ausreichenden Spiel ausgestattet, damit die Spindel bewegt werden kann. Läuft aber der Anlaufring 200 auf den Kegelsitz 28 auf, so wird das Spiel eliminiert und eine exakte Lage des Spindelkopfes 27 festgelegt. Es ist dabei von erheblichem Vorteil, daß sich der Kegelsitz 28 verhältnismäßig nahe am Spindelkopf 27 befindet, um entsprechende Maßtoleranzen, Wärmeausdehnungen und Ungenauigkeiten von vorneherein zu unterdrücken. Anstelle des hier gezeigten Kegelsitzes 28 ist nach der Erfindung natürlich auch vorgesehen, alle anderen bekannten Zentrierflanschanordnungen einzusetzen.

Die in dem Ausführungsbeispiel nach Fig. 4 gezeigte Spindel 2 ist als Motorspindel ausgebildet, im hinteren Bereich, dem Spindelkopf 27 abgewandt, ist auf der Spindelachse 20 ein Antriebsmotor 29 vorgesehen. Der aufwendige, platzraubende Aufbau mit einem externen Getriebe oder einem Zahnriemenantrieb wird sowohl bei der bewegten Spindel 2 wie auch bei der feststehenden Spindel 1 (siehe hier Motor 19) vermieden.

Bei dem in Fig. 4 gezeigten Ausführungsbeispiel ist eine Verdrehsicherung 6' realisiert. Ähnlich wie in Fig. 1 ist im vorderen Bereich eine Verdrehsicherung 6' vorgesehen, die hier im Kegelsitz 28 mit eingebaut ist. Der Anlaufring 200 besitzt dazu einen Vorsprung, der in eine entsprechende Ausnehmung im Kegelsitz 28 haltend eingreift und so eine Verdrehsicherung ergibt. Natürlich kann umgekehrt der Anlaufring 200 eine Ausnehmung haben und der Kegelsitz 28 einen Vorsprung. Diese Verdrehsicherung 6' ist insbesondere in der vorderen Stellung der Spindel 2 wirksam. Des weiteren ist aber noch eine weitere Verdrehsicherung 6 vorgesehen wie in Fig. 2 gezeigt. Dadurch gewinnt die Anordnung auch eine Verdrehsicherung 6, die bei der Rückzugsbewegung, also während des gesamten Verfahrweges, ebenso wirksam ist. Die Erfindung läßt es offen, ein, zwei oder mehrere verschiedene Verdrehsicherungen miteinander zu kombinieren.

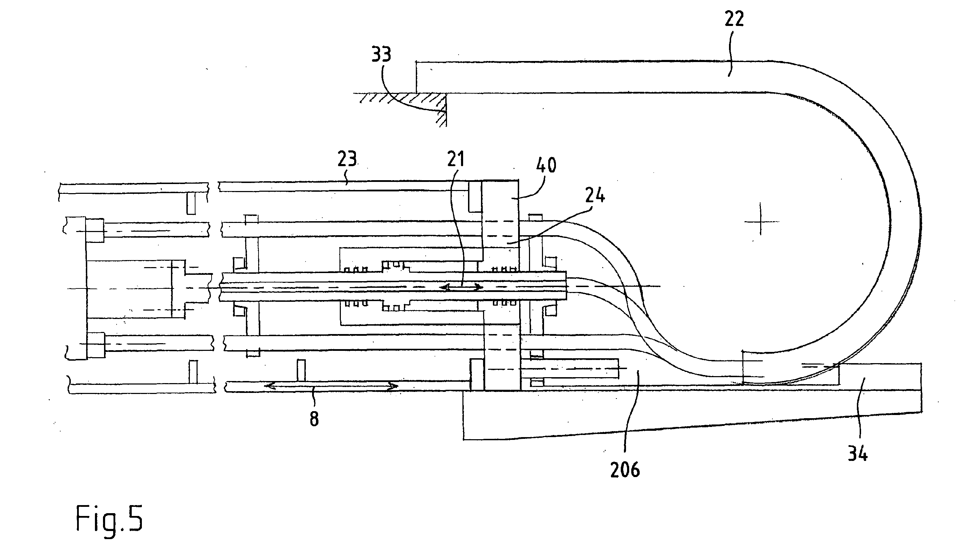

In Fig. 5 ist gezeigt, daß die Bewegung 21 der zweiten Spindel 2 geringer ist, wie der große Hub 8 der Gesamtpinole beziehungsweise des gesamten Werkzeugschlittens. Dies ist durch die unterschiedlichen Längen der jeweiligen Doppelpfeile 8, 21 ausgedrückt. Des weiteren ist eine mit der Pinole beziehungsweise den Spindelschlitten mitfahrende, an der Rückseite der Spindel 1, 2 angeordnete Kabelwanne 34 vorgesehen. Sie dient für eine sichere Führung der Leitungen 22. Günstigerweise (aber nicht zwingend) sind die Leitungen 22 zum Beispiel in sogenannten Energieführungsketten eingebettet, die ihrerseits beispielweise an dem Fixierpunkt 33 zum Beispiel an dem Gehäuse 23 der Spindel oder der Pinole festgelegt sind. Da sich die zweite Spindel 2 gegenüber der Pinole zu bewegen vermag (siehe Doppelpfeil 21), ist vorgesehen, daß für die Leitungen der Spindel 2 des weiteren eine Kabelführung 206 vorgesehen ist, die mit der zweiten Spindel 2 mitfahrend, seitig an dieser angeordnet ist.

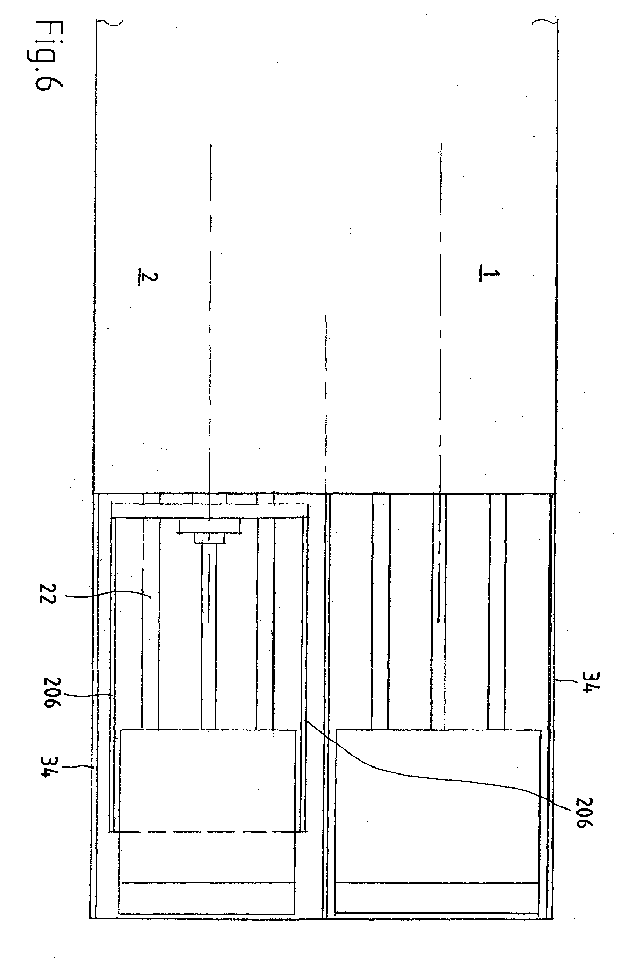

In Fig. 6 ist nochmals gezeigt, wie an der beweglichen Spindel 2 neben der Kabelwanne 34 noch eine Kabelführung 206, innerhalb der Kabelwanne 34, angeordnet ist. Günstigerweise ist eine Führung für die Bewegung der Kabelführung 206 in der Kabelwanne 34 vorgesehen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungszentrum für die insbesondere spanabhebende Bearbeitung von Werkstücken, wobei das Bearbeitungszentrum eine Bearbeitungseinheit aufweist, welche mindestens eine erste (1) und eine zweite (2) Spindel trägt, **dadurch gekennzeichnet, daß** zumindest die zweite Spindel (2) gegenüber der ersten Spindel (1) axial zur Spindelachse (20) in Spindelrichtung (21) bewegbar, insbesondere zurückbewegbar ist.

2. Bearbeitungszentrum nach Anspruch 1, **dadurch gekennzeichnet, daß** die Spindeln (1, 2) in einer gemeinsamen Pinole oder auf einem gemeinsamen Spindelschlitten der Bearbeitungseinheit angeordnet sind und die Pinole beziehungsweise der Spindelschlitten gegen das Werkstück anstellbar.

3. Bearbeitungszentrum nach einem oder mehreren der vorhergehenden Ansprüche, **dadurch gekennzeichnet, daß** mindestens eine erste Spindel (1) in der Pinole oder auf dem Spindelschlitten fest angeordnet ist und mindestens eine zweite Spindel (2) in der Pinole oder auf dem Spindelschlitten axial zur Spindelachse (20) bewegbar (21) insbesondere zurückbewegbar ist.

4. Bearbeitungszentrum nach einem oder mehreren der vorhergehenden Ansprüche, **dadurch gekennzeichnet, daß** das Verhältnis zwischen dem Abstand (a) der Spindelachsen (10, 20) und dem Spindeldurchmesser (d) kleiner 2 und größer 1, bevorzugt kleiner 1,5 und größer 1,01 ist.

5. Bearbeitungszentrum nach einem oder mehreren der vorhergehenden Ansprüche, **dadurch gekennzeichnet, daß** der Spindeldurchmesser (d) bis zu 200 mm, bevorzugt ca. 150 mm, beträgt.

6. Bearbeitungszentrum nach einem oder mehreren der vorhergehenden Ansprüche, **dadurch gekennzeichnet, daß** die erste und die zweite Spindel (1,2) das gleiche Werkstück zu bearbeiten vermögen und/oder der Abstand der Spindeln (1, 2) variierbar ist und/oder eine mit der Pinole beziehungsweise dem Spindelschlitten mitfahrende, an der Rückseite der Spindeln (1, 2) angeordneten Kabelwanne (34) vorgesehen ist.

7. Bearbeitungszentrum nach einem oder mehreren der vorhergehenden Ansprüche, **dadurch gekennzeichnet, daß** an der zweiten bewegbaren Spindel (2), auf der dem Werkzeug abgewandten Seite eine Zugstange (3) angreift und/oder eine Arretierung der zweiten Spindel (2) in der vorderen Position vorgesehen ist und/oder die zweite, zurückbewegbare Spindel (2) um ein größeres Maß zurückziehbar ist wie die Bohrungstiefe im Werkstück oder der Verschubweg der Pinole beziehungsweise des Spindelschlittens während der Bearbeitung und/oder eine an der zweiten Spindel (2) rückseitig angeordneten, mit dieser mitfahrenden Kabelführung (206) vorgesehen ist.

8. Bearbeitungszentrum nach einem oder mehreren der vorhergehenden Ansprüche, **dadurch gekennzeichnet, daß** ein Kugelrollspindelantrieb, ein Elektromotor, ein hydraulisch oder pneumatisch wirkender Arbeitszylinder oder ein sonstiger Axialantrieb (4) vorgesehen ist, welcher auf die Zugstange (3) wirkt, um die zweite Spindel (2) zu bewegen und/oder die Zugstange (3) eine Bohrung (30) für das Leiten von Kühlmittel aufweist.

9. Bearbeitungszentrum nach einem oder mehreren der vorhergehenden Ansprüche, **dadurch gekennzeichnet, daß** die Bearbeitungseinheit eine Führung (5) für die zweite bewegbare Spindel (2) besitzt.

10. Bearbeitungszentrum nach einem oder mehreren der vorhergehenden Ansprüche, **dadurch gekennzeichnet, daß** an der Bearbeitungseinheit ein Zentrierflansch (25) vorgesehen ist, der mit dem Spindelkopf (27) der zweiten Spindel (2) zur Festlegung der zweiten Spindel (2) zusammenwirkt.

11. Bearbeitungszentrum nach einem oder mehreren der vorhergehenden Ansprüche, **dadurch gekennzeichnet, daß** der Zentrierflansch als Kegelsitz ausgebildet ist und/oder daß eine hydraulische oder mechanische Arretierung der zweiten Spindel in der vorderen Position vorgesehen ist.

12. Bearbeitungszentrum nach einem oder mehreren der vorhergehenden Ansprüche, **dadurch gekennzeichnet, daß** an der Bearbeitungseinheit mindestens eine Verdrehsicherung (6) für die zweite Spindel (2) vorgesehen ist.

13. Bearbeitungzentrum nach einem oder mehreren der vorhergehenden Ansprüche, **dadurch gekennzeichnet, daß** die Verdrehsicherung (6) entlang der Bewegung der zweiten Spindel (2) in Spindelrichtung (21) wirkt und/oder dann wirkt, wenn sich die zweite Spindel (2) in der vorderen Position befindet und/oder die Verdrehsicherung durch einen in einer Nut geführten Nutenstein gebildet ist.

14. Bearbeitungszentrum nach einem oder mehreren der vorhergehenden Ansprüche, **dadurch gekennzeichnet, daß** für die zweite Spindel (2) auf der Bearbeitungseinheit ein Gehäuse (23) vorgesehen ist und auf dessen Mantelinnenfläche Führungen (5) für die bewegte zweite Spindel (2) angeordnet sind und an dem Gehäuse (23) ein Widerlager (40) für den Axialantrieb (4) angeordnet ist.

15. Bearbeitungszentrum nach einem oder mehreren der vorhergehenden Ansprüche, **dadurch gekennzeichnet, daß** zumindest Teile des Gehäuses (23) zumindest Teile der die Spindeln (1, 2) aufnehmenden Pinole oder die Spindeln (1, 2) tragenden Spindelschlitten sind.

16. Bearbeitungszentrum nach einem oder mehreren der vorhergehenden Ansprüche, **dadurch gekennzeichnet, daß** die Bearbeitungseinheit mindestens zwei Gruppen mit mindestens einer oder mehreren Spindeln (1, 2) aufweist und zumindest Spindeln (1, 2) einer Gruppe gegenüber Spindeln (1, 2) der anderen Gruppe axial bewegbar, insbesondere zurückbewegbar ist.

17. Bearbeitungszentrum nach einem oder mehreren der vorhergehenden Ansprüche, **gekennzeichnet durch** einen Direktantrieb (19, 29) der Spindeln (1, 2).

18. Bearbeitungszentrum nach einem oder mehreren der vorhergehenden Ansprüche, **gekennzeichnet durch** eine Führung der Kabelführung (206) in der Kabelwanne (34).
